# EUROPÄISCHE PATENTANMELDUNG

(11) **EP 4 729 894 A2**
(43) Veröffentlichungstag der Anmeldung: **22.04.2026**
(21) Anmeldenummer: 26163337.4
(22) Anmeldetag: 13.08.2020
(51) Int. Cl.: G01F 15/06

(54) **MESSGERÄT MIT EINSTELLBARER AKTIVIERUNG**

(62) Teilanmeldung aus: 20757290.0
(71) Anmelder: VEGA Grieshaber KG, 77709 Wolfach (DE)
(72) Erfinder: STAIGER, Holger, 78739 Hardt (DE); MOSER, Patrick, 4021 Linz (AT); SCHWAB, Jonas, 77796 Mühlenbach (DE)
(74) Vertreter: Maiwald GmbH

(57) **Zusammenfassung**

Die Erfindung betrifft ein Messgerät (100) zur Füllstandmessung, zur Grenzstandbestimmung, zur Druckmessung und/oder zur Temperaturmessung. Das Messgerät (100) weist eine interne Energiequelle (200) und eine externe Spannungsversorgung, mindestens einen steuerbaren Schalter (250) und eine Aktivierungseinheit (300) auf. Diese ist die direkt mit der Energiequelle (200) verbunden, sie umfasst die einen programmierbaren endlichen Automaten (350), wobei der endliche Automat (350) als dedizierte Zustände eines Mealy- oder Moore-Automaten programmierbar ist, wobei der endliche Automat (350) als Hardwareelement realisiert ist. Die Aktivierungseinheit (300) ist dazu eingerichtet, mittels des endlichen Automaten (350) den steuerbaren Schalter (250) zu steuern. Weiterhin weist das Messgerät (100) mindestens einen Verbraucher (400) auf, der über den mindestens einen steuerbaren Schalter (250) mit der Energiequelle (200) verbunden ist.

## Beschreibung

### Gebiet der Erfindung

Die Erfindung betrifft ein Messgerät, z.B. ein Feldgerät, mit einem Sensor zur Füllstandmessung. Insbesondere betrifft die Erfindung ein Messgerät mit einer Aktivierungseinheit, und eine Verwendung.

### Hintergrund

Zur Füllstandmessung, zur Grenzstandbestimmung, zur Durchflussmessung, zur Druckmessung und/oder zur Temperaturmessung werden in vielen Fällen Messgeräte, z.B. Feldgeräte und/oder Messsysteme, eingesetzt, die längere Zeit von einem Stromnetz getrennt sein können und auf eine eigene Energiequelle angewiesen sind. Daher kann es in vielen Fällen vorteilhaft sein, dass diese möglichst lange vorhält.

Die Druckschrift EP 3 598 079 A1 betrifft batteriebetriebene Feldgeräte, insbesondere Feldgeräte zur Füllstandmessung, zur Grenzstandbestimmung, zur Erfassung der Topologie einer Füllgutoberfläche oder zur Anzeige der Messwerte dieser Geräte.

Die Druckschrift US 2010 298 999 A1 betrifft eine Steuerungseinheit für ein Feldgerät, das einen Betriebsmodus und einen Schlafmodus auswählen kann.

Die Druckschrift EP 3 598 078 A1 betrifft batteriebetriebene Feldgeräte, insbesondere Feldgeräte zur Füllstandmessung, zur Grenzstandbestimmung, zur Erfassung der Topologie einer Füllgutoberfläche oder zur Anzeige der Messwerte dieser Geräte.

Die Druckschrift EP 3 279 619 A1 betrifft das Gebiet radarbasierter Füllstandmessung.

Die Druckschrift EP 2 667 162 A1 betrifft ein Verfahren und eine Vorrichtung zur Messung der physikalischen Eigenschaften von Zwei-Phasen Fluiden.

Die Druckschrift EP 2 829 929 A1 betrifft ein Feldgerät mit einem Mikroprozessor, wobei der Mikroprozessor einen Energiesparmodus aufweist.

Die Druckschrift US 8,970,395 B2 betrifft ein batteriebetriebenes System zur Füllstandmessung.

### Zusammenfassung

Es ist Aufgabe der Erfindung, eine Maßnahme zur zumindest teilweisen Reduktion des Stromverbrauchs einer Energiequelle eines Messgeräts zu Verfügung zu stellen.

Diese Aufgabe wird durch den Gegenstand der unabhängigen Patentansprüche gelöst. Weiterbildungen der Erfindung ergeben sich aus den Unteransprüchen und der folgenden Beschreibung.

Ein Aspekt betrifft ein Messgerät zur Füllstandmessung, zur Topologiebestimmung, zur Grenzstandbestimmung, zur Durchflussmessung, zur Druckmessung und/oder zur Temperaturmessung. Das Messgerät weist eine interne Energiequelle auf und eine Eingangsschnittstelle, die zum Anschluss einer optionalen externen Spannungsversorgung eingerichtet ist. Ferner weist das Messgerät mindestens einen steuerbaren Schalter auf. Weiterhin weist es eine Aktivierungseinheit auf, die direkt mit der internen Energiequelle und optional mit der externen Spannungsversorgung verbunden ist. Die Aktivierungseinheit umfasst einen programmierbaren endlichen Automaten, wobei der endliche Automat als dedizierte Zustände eines Mealy- oder Moore-Automaten programmierbar ist, und wobei der endliche Automat als Hardwareelement realisiert ist. Die Aktivierungseinheit ist dazu eingerichtet, mittels des endlichen Automaten den steuerbaren Schalter zu steuern. Ferner weist das Messgerät mindestens einen Verbraucher auf, der über den mindestens einen steuerbaren Schalter mit der Energiequelle verbunden ist.

Die Energiequelle kann beispielsweise eine Zelle, eine Batterie, ein Akkumulator sein, eine Sonderform wie z.B. ein Solarmodul, eine Brennstoffzelle oder ein sog. "Energy Harvesting"-Energiequelle und/oder eine Kombination aus verschiedenen Ausführungsformen sein. Der oder die steuerbaren Schalter können beispielsweise mechanische Schalter, z.B. ein Relais, oder Halbleiterschalter, z.B. ein MOSFET, sein. Ein steuerbarer Schalter kann ein oder mehrere Komponenten oder Geräte ein-, aus- oder umschalten.

Die Aktivierungseinheit ist direkt mit der Energiequelle verbunden, so dass zumindest Teile der Aktivierungseinheit immer mit Strom versorgt werden. Die Aktivierungseinheit umfasst einen programmierbaren endlichen Automaten (Finite State Machine, FSM), wie z.B. ein oder mehrere Hardware-Bausteine wie ein FPGA (Field Programmable Gate Array), ein PAL (Programmable Array Logic) und/oder andere Hardware. Alternativ oder zusätzlich kann die Aktivierungseinheit als Software oder als Firmware realisiert sein, z.B. als Sprungtabelle und/oder als Switch/Case-Anweisung und z.B. als Teil eines Prozessors realisiert sein. Zumindest bei einigen Prozessoren und/oder anderen Bausteinen (z.B. FPGAs) können Teile ihrer Hardware abschaltbar bzw. deaktivierbar ausgeführt sein. Die Automaten können einmal oder mehrmals programmierbar sein. Zumindest einige Zustände des Automaten können auf den steuerbaren Schalter einwirken, d.h. den Schalter - oder auch mehrere Schalter - ein-, aus- oder umschalten. Mittels des oder der steuerbaren Schalter kann mindestens ein Verbraucher geschaltet werden, der über den mindestens einen steuerbaren Schalter mit der Energiequelle verbunden ist. Ein Verbraucher kann beispielsweise der Sensor des Messgeräts sein, und z.B. einen Impedanzgrenzschalter, einen Vibrationsgrenzschalter, ein Hochfrequenzfrontend, Ultraschallfrontend, LiDAR- oder Laserfrontend aufweisen. Alternativ oder zusätzlich kann der Verbraucher als eine Anzeigevorrichtung, eine Steuervorrichtung und/oder als eine weitere Komponente des Messgeräts ausgelegt sein. Ebenso ist eine Kommunikationseinheit (drahtlos oder drahtgebunden) ein möglicher Verbraucher, welcher durch die steuerbaren Schalter mit der Energiequelle verbunden werden kann. Zusätzlich kann auch ein Display, Signalelemente oder Signalleuchten (z.B. LED), Tasten oder sonstige Teile beispielsweise einer Anzeige- und Bedieneinheit mit der Energiequelle verbunden sein.

Durch diese Auslegung können zumindest einige Komponenten - in einigen Ausführungsformen sogar die meisten Komponenten und/oder die Komponenten mit dem größten Stromverbrauch - über längere Zeit stromlos gehalten werden. Dies kann zu einer deutlichen Reduktion des Stromverbrauchs der Energiequelle des Messgeräts beitragen. Darüber hinaus kann durch den endlichen Automaten eine hohe Flexibilität der Einschaltbedingungen erreicht werden. So kann z.B. eine Einschaltsequenz gewählt werden, die vor Fehlbedienung und/oder vor unautorisiertem Zugriff schützt. Wenn zum Beispiel eine Sequenz "Taster dreimal drücken" programmiert wurde, so kann dies - bei sehr geringen Stromverbrauch, weil nur ein kleiner Automat oder nur ein Teil des Automaten mit Strom versorgt zu werden braucht - vorteilhafterweise zu einer sehr guten Balance zwischen Funktionalität, Flexibilität und Stromverbrauch führen. Damit kann ein autarker Sensor (oder Messgerät) realisiert werden, der durch verschiedene Aktivierungsquellen aktiviert werden kann und die Priorität und das Verhalten der Aktivierungsquellen flexibel und/oder situationsbedingt an die Anwendung angepasst einstellen kann.

In einigen Ausführungsformen weist der endliche Automat als Eingabevorrichtung mindestens eine der folgenden Vorrichtungen auf: einen Taster, einen Schalter, ein erstes Zeitmodul (z.B. eine Real-Time Clock, RTC), eine Spannungsüberwachung, einen magnetischen Kontakt, und/oder einen Sensor für Licht, Wärme, Schall. Dabei kann die Spannungsüberwachung z.B. zur Detektion einer zusätzliche, Spannungsquelle ausgelegt sein, oder ein Unterschreiten der Energiequelle einer vordefinierten Spannung registrieren. Der magnetische Kontakt kann z.B. ein Reedkontakt oder ein Hall-Sensor sein. Es können zum Beispiel zwei Typen von Eingabevorrichtung vorgesehen sein: ein erster Typ, der dauernd von der Energiequelle des Messgeräts versorgt wird (z.B. eine Uhr), oder ein zweiter Typ, der eine eigene (wie eine Spannungsüberwachung) oder keine Spannungsversorgung (wie ein Taster) aufweist. Damit kann vorteilhafterweise eine große Anzahl von Typen von Eingabevorrichtungen verwendet werden. Die Energieversorgung dieser Typen von Eingabevorrichtungen kann durch den Automaten gesteuert werden, um den Energiebedarf weiter zu senken.

Erfindungsgemäß ist der endliche Automat als ein oder mehrere Hardwareelement(e) realisiert. Die Wahl der Realisierung kann z.B. von der geforderten Flexibilität, Stromverbrauch, und/oder anderen Faktoren abhängig sein.

Erfindungsgemäß ist der endliche Automat programmierbar. Der Automat kann z.B. einmal programmierbar sein (z.B. PAL), oder mehrfach programmierbar (z.B. FPGA). Damit kann die Schaltsequenz in weiten Bereichen für jedes Messgerät individualisiert werden. Einmal programmierbare Bausteine können z.B. aus Sicherheitsüberlegungen gewählt werden. Mehrfach programmierbare Bausteine können z.B. eine erhöhte Flexibilität garantieren. Insbesondere kann der Automat verändert werden, ohne dass dafür der Ruhezustand des Füllstandmessgeräts verlassen werden muss. Alternativ oder zusätzlich kann der Automat z.B. über das Funkmodul programmiert bzw. umprogrammiert werden.

In einigen Ausführungsformen weisen zumindest einige Zustände des endlichen Automaten ein veränderbares Attribut auf. Das veränderbare Attribut kann z.B. als ein inkrementierbares Attribut realisiert sein, als Zeitstempel und/oder als sonstige Eigenschaft. Beispielsweise kann ein inkrementierbares Attribut genutzt werden, um ein Logging des Messgeräts zu realisieren. Dies kann z.B. mit einem Zeitstempel, einer Login-Identität und/oder weiteren Merkmalen kombiniert werden. Damit kann z.B. ein Grund für die Aktivierung des Messgeräts gespeichert und/oder analysiert werden.

In einigen Ausführungsformen ist der endliche Automat auslesbar. Dies kann z.B. genutzt werden, um Attribute der Zustände auszulesen. Es kann auch zur Kontrolle - z.B. "was ist programmiert?" - genutzt werden und/oder für Wartungszwecke.

In einigen Ausführungsformen ist der endliche Automat verschlüsselt programmierbar und/oder auslesbar ausgeführt. Damit kann beispielsweise ein Logging des Messgeräts mit erhöhter Sicherheit realisiert werden.

In einigen Ausführungsformen umfasst der Verbraucher einen Füllstandsensor, ein Steuermodul, ein zweites Zeitmodul, Anzeigeelemente, Signalelemente, und/oder ein Funkmodul. Das zweite Zeitmodul unterscheidet sich von dem ersten Zeitmodul dadurch, dass es schaltbar ausgeführt ist, d.h. es kann einen höheren Stromverbrauch aufweisen und erlaubt eine höhere Komplexität als das erste Zeitmodul. Es können Verbraucher beispielsweise zusammen oder wahlweise selektiv geschaltet werden.

Ausgewählte Ereignisse können z.B. nur für eine Teilaktivierung des Systems sorgen. Beispielsweise kann der Verbraucher einen NFC-Chip (NFC: Near Field Communication, Nahfeldkommunikation) umfassen, der nur dann komplett aktiviert wird, wenn das System durch NFC aktiviert wird. Ebenso können Teilsysteme, wie Kommunikationsmodule auch dann mit Energie versorgt werden, wenn das Hauptsystem - z.B. der Sensor - im Ruhezustand ist.

In einigen Ausführungsformen weist das Messgerät weiterhin aufweisend ein weiteres Zeitmodul auf, das dazu eingerichtet ist, das Zeitmodul und/oder das zweite Zeitmodul zu überwachen. Es kann zur Überwachung des ersten und/oder zweiten Zeitmoduls in dem Automaten ein weiteres Zeitmodul integriert sein. Durch dieses Zeitmodul kann ein Aktivieren des Systems, auch z.B. bei einem Fehlverhalten des ersten Zeitmoduls, ermöglicht werden. Derartige Systeme werden gelegentlich als "RTC-Watchdog" bezeichnet. Die genannte Funktionalität kann auch Teil des ersten oder zweiten Zeitmoduls sein

In einigen Ausführungsformen realisiert der endliche Automat einen positiven oder negativen zeitlichen Versatz, um mindestens einen der steuerbaren Schalter verzögert und/oder zu einem anderen Zeitpunkt als einen anderen einen der steuerbaren Schalter zu aktivieren. Ein positiver zeitlicher Versatz kann z.B. durch eine Zustandskette und/oder durch iteratives Durchlaufen eines bestimmten Zustands erreicht werden. Ein negativer zeitlicher Versatz kann z.B. durch einen positiven zeitlichen Versatz der anderen steuerbaren Schalter erreicht werden. Damit kann vorteilhafterweise eine zeitliche Variabilität bei der Aktivierung des Systems oder von Teilsystemen - d.h. eine relativ frühere oder spätere Aktivierung - erreicht werden. Der zeitliche Versatz wird gelegentlich als "Zeit-Jitter" bezeichnet. Diese Funktion des Automaten kann vorteilhafterweise ein gleichzeitiges Aktivieren mehrerer identisch oder ähnlich eingestellter oder konfigurierter Geräte verhindern.

Ein Aspekt betrifft eine Verwendung eines Messgeräts wie oben und/oder nachfolgend beschrieben zur Füllstandmessung, zur Grenzstandbestimmung, zur Druckmessung und/oder zur Temperaturmessung.

Zur weiteren Verdeutlichung werden Aspekte der vorliegenden Offenbarung anhand von in den Figuren abgebildeten Ausführungsformen beschrieben. Diese Ausführungsformen sind nur als Beispiel, nicht aber als Einschränkung zu verstehen.

### Kurze Beschreibung der Figuren

Dabei zeigt:
- **Fig. 1**: schematisch ein Messgerät gemäß einer Ausführungsform;
- **Fig. 2**: schematisch ein Messgerät gemäß einer weiteren Ausführungsform.

### Detaillierte Beschreibung von Ausführungsformen

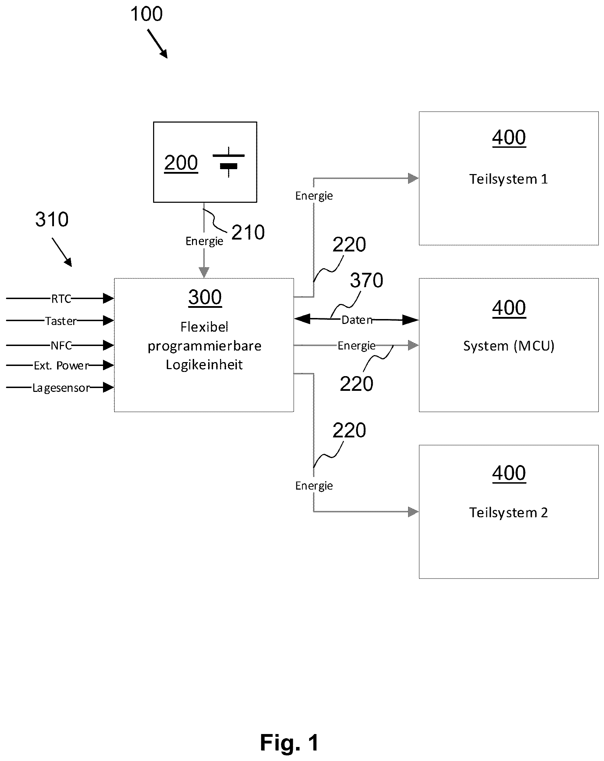

**Fig. 1** zeigt schematisch ein Messgerät 100, das beispielsweise zur Füllstandmessung, zur Grenzstandbestimmung, zur Druckmessung und/oder zur Temperaturmessung eingerichtet oder geeignet sein kann. Das Messgerät 100 kann mehrere Teilsysteme aufweisen, deren Energieversorgung von einer flexibel programmierbaren Logikeinheit oder Aktivierungseinheit 300, die z.B. einen programmierbaren endlichen Automaten beinhalten kann, gesteuert werden kann. Darüber hinaus kann noch eine Datenverbindung 370 zwischen dem Hauptsystem (MCU, MicroController Unit) und der programmierbaren Logikeinheit implementiert sein, die beispielsweise zur Programmierung, zur Umprogrammierung und/oder zum Auslesen der Logikeinheit 300 genutzt werden kann. Die Logikeinheit 300 ist direkt mit der Energiequelle 200 verbunden, und wird kontinuierlich mit Energie versorgt. Die Logikeinheit 300 kann mit Eingabevorrichtungen (nicht dargestellt) über eine Eingangsschnittstelle 310 seriell und/oder parallel mit der Logikeinheit 300 verbunden sein. Die Eingangsschnittstelle 310 kann beispielsweise zum Empfang von Daten eines RTC (Real Time Clock), eines Tasters, eines NFC-Moduls, einer externen Spannungsversorgung, einem Lagesensor, und weiteren Eingabevorrichtungen eingerichtet sein.

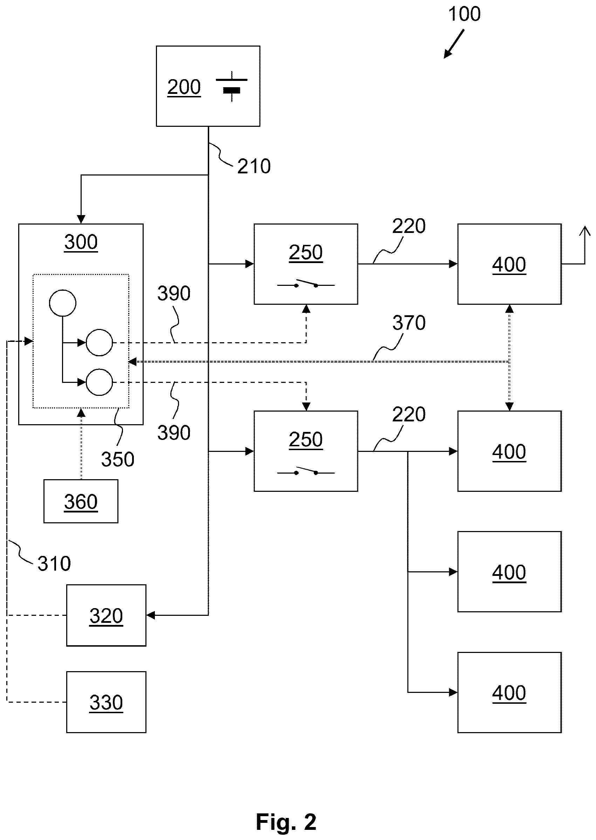

**Fig. 2** zeigt schematisch eine weitere Ausführungsform eines Messgeräts 100. Das Messgerät 100 kann z.B. als Feldgerät, insbesondere als ein autarkes Feldgerät, ausgelegt sein. Das Messgerät 100 kann eine einzige Energiequelle 200 aufweisen, z.B. in Form einer Zelle, einer Batterie oder eines Akkus; es kann aber auch zusätzlich noch weitere Energiequellen (nicht dargestellt) aufweisen, z.B. ein Solarmodul, eine Brennstoffzelle, ein sog. "Energy Harvesting"-Energiequelle und/oder eine Kombination aus verschiedenen Energiequellen. In der gezeigten Ausführungsform ist die Energiequelle 200 über eine Leitung 210 direkt mit mehreren Modulen oder Komponenten des Messgeräts 100 verbunden. So ist eine Aktivierungseinheit 300 direkt mit der Energiequelle 200 verbunden. Weiterhin ist eine Eingabevorrichtung - oder eine Klasse von Eingabevorrichtungen - 320 direkt mit der Energiequelle 200 verbunden. Komponenten, die dieser Klasse von Eingabevorrichtungen 320 zugeordnet werden, sind z.B. ein erstes Zeitmodul (Real-Time Clock, RTC), das dazu eingerichtet ist, bestimmte Aktionen der Aktivierungseinheit 300 zu steuern.

Die Aktivierungseinheit 300 ist direkt mit der Energiequelle 200 verbunden, und ist dazu eingerichtet, mittels des endlichen Automaten 350 einen oder mehrere steuerbaren Schalter 250 zu steuern. Der oder die steuerbaren Schalter 250 sind über die Leitung 210 mit der Energiequelle 200 verbunden und weisen an ihrem Ausgang eine gesteuerte Leitung 220 auf. An je einer gesteuerten Leitung 220 können ein oder mehrere Verbraucher 400 angeordnet sein, so dass die Verbraucher 400 - einzeln oder getrennt - über den mindestens einen steuerbaren Schalter 250 mit der Energiequelle 200 verbunden sind. Als Verbraucher 400 kann dabei ein Füllstandsensor, ein Steuermodul, ein Anzeige- und/oder Bedienelement, ein zweites Zeitmodul, Anzeigeelemente, Signalelemente und/oder ein Funkmodul fungieren.

Der oder die Schalter 250 können mittels des programmierbaren endlichen Automaten 350 - bzw. mittels dedizierter Zustände des endlichen Automaten 350 - über Steuersignale oder Steuerleitungen 390 gesteuert werden. Der Automat 350 kann z.B. als Mealy- oder als Moore-Automat ausgelegt sein. Der endliche Automat 350 als Eingabevorrichtung 320, 330 mindestens eine der folgenden Vorrichtungen aufweisen: Beispielsweise einen Taster, einen Schalter, ein erstes Zeitmodul, eine Spannungsüberwachung, einen magnetischen Kontakt, einen Sensor für Licht, Wärme, Schall und/oder weitere Eingabevorrichtungen. Die Eingabevorrichtungen können eine Klasse 320 von Eingabevorrichtungen umfassen, die dauernd von der Energiequelle versorgt werden und/oder eine Klasse 320 von Eingabevorrichtungen, die eine eigene Spannungsversorgung aufweisen oder keine Spannungsversorgung benötigen. Die Eingabevorrichtungen 320, 330 sind über eine Eingangsschnittstelle 310 seriell und/oder parallel mit dem Automaten 350 verbunden. Der Automat 350 kann z.B. eine Schnittstelle 310 aufweisen, die es ermöglicht, den Automaten 350 durch ein Modul 360 zu programmieren. Alternativ oder zusätzlich kann der Automat 350 z.B. über andere Module - z.B. über das Funkmodul und/oder das Steuermodul - über eine Verbindung 370 programmierbar und/oder auslesbar sein. Damit kann z.B. erreicht werden, dass sich das System hauptsächlich in einem Ruhezustand befindet, d.h. die meisten oder alle Verbraucher 400 sind mittels des oder der steuerbaren Schalter 250 abgeschaltet.

Dadurch kann Energie eingespart werden, d.h. die Belastung der Energiequelle 200 signifikant reduziert werden, weil sich alle nicht benötigten Komponenten in einem stromsparenden Modus befinden oder überhaupt nicht mit Spannung versorgt werden. Andererseits ermöglicht die Flexibilität des programmierbaren endlichen Automaten 350, eine Vielfalt von Aktivierungs- und Deaktivierungs-Szenarien zu realisieren, die z.B. ein "Automatenschema" wie "Eingangsmuster - Sequenz von internen Zuständen - Ausgangs- oder Ausgabemuster" erfüllen. Beispiele für derartige Szenarien können sein:
- Ein Zeitmodul (RTC), das flexibel eingestellt werden kann, z.B. für eine Zeitspanne, nach der ein bestimmter Schalter 250 ein-, aus- oder umgeschaltet werden kann.
- Eine Überwachung des Zeitmoduls (z.B. mittels eines Zählers in dem Automaten 350), welche ebenfalls flexibel eingestellt werden kann und das System z.B. nur aktiviert, falls das Zeitmodul nicht wie gewünscht funktioniert hat.
- Wenn zusätzlich zur internen Spannungsversorgung 200 eine externe Spannungsversorgung angeschlossen, kann das mittels bestimmter Sensoren dem Automaten 350 über die Schnittstelle 310 signalisiert werden.
- An die Schnittstelle 310 kann eine NFC-Kommunikation angeschlossen sein, und/oder die NFC-Kommunikation kann mittels eines Aufwachbefehls (per Taster, NFC-Telegramm, etc.) aktiviert werden.
- Der Automat 350 kann beispielsweise auch durch einen Magneten oder eine Magnetfeldänderung (z.B. Reedkontakt oder Hall-Sensor) aktiviert werden.
- Es kann eine mechanische Aktivierung (z.B. über Taster oder Schalter) realisiert werden.
- Eine Aktivierung kann mittels Erschütterungen oder Positionswechsel (z.B. Beschleunigungs- oder Lagesensor) realisiert werden.
- Ein niedriger Batteriestand bzw. Ladezustand des aufladbaren Energiespeichers 200 kann signalisiert werden und den Automaten zur Ausgabe eines Alarms (z.B. LED) veranlassen.
- Analog kann z.B. ein Lichtsensor, Wärmesensor, Schallsensor (z.B. Klatschen oder Kommandos wie "Hey Vega") als Aktivierung verwendet werden.
- Das Zeitmodul aktiviert das System zu definierten Zeiten zyklisch, wobei ein Messwert erfasst und sogleich per Funk versandt wird. Anschließend geht das System wieder in den Ruhezustand.
- Durch das Betätigen des Tasters für eine vordefinierte Zeitspanne, z.B. mehr als 5 Sekunden, wird das System aktiviert und erfasst nur Messwerte, speichert diese ab, übermittelt jedoch keine Daten und deaktiviert sich wieder.
- Durch den Reedkontakt wird ein Bluetooth-Modul (als Verbraucher 400) für eine gewisse Zeit aktiviert. Anschließend geht das System wieder in den Ruhezustand.
- Durch eine flexibel einstellbare Kombination aus Taster und Reedkontakt wird das System aktiviert und macht diese mittels des Bluetooth-Moduls oder des NFC-Moduls zugänglich.
- Wird der Reedkontakt dauerhaft ausgelöst und gleichzeitig eine Verbindung mit dem NFC-Modul aufgenommen, kann das Füllstandmessgerät sowie die Einstellungen der Aktivierungsquellen neu konfiguriert werden, beispielsweise dessen Messzyklus, Datenversand und/oder weitere Parameter.

### Liste der Bezugszeichen

- 100: Füllstandmessgerät
- 200: Energiequelle
- 210: Leitung
- 220: gesteuerte Leitung
- 250: steuerbarer Schalter
- 300: Aktivierungseinheit
- 310: Eingangsschnittstelle
- 320, 330: Eingabevorrichtungen
- 350: programmierbarer endlicher Automat
- 360: Modul
- 390: Steuerleitungen
- 400: Verbraucher

## Patentansprüche

1. Messgerät (100) zur Füllstandmessung, zur Grenzstandbestimmung, zur Druckmessung und/oder zur Temperaturmessung, das Messgerät (100) aufweisend:
eine interne Energiequelle (200);
eine Eingangsschnittstelle (310), die zum Anschluss einer optionalen externen Spannungsversorgung eingerichtet ist;
mindestens einen steuerbaren Schalter (250);
eine Aktivierungseinheit (300),
die direkt mit der internen Energiequelle (200) und optional mit der externen Spannungsversorgung verbunden ist,
die einen programmierbaren endlichen Automaten (350) umfasst, wobei der endliche Automat (350) als dedizierte Zustände eines Mealy- oder Moore-Automaten programmierbar ist, wobei der endliche Automat (350) als Hardwareelement realisiert ist, und
die dazu eingerichtet ist, mittels des endlichen Automaten (350) den steuerbaren Schalter (250) zu steuern; und
mindestens einen Verbraucher (400), der über den mindestens einen steuerbaren Schalter (250) mit der Energiequelle (200) verbunden ist.

2. Messgerät (100) nach Anspruch 1,
wobei der endliche Automat (350) als Eingabevorrichtung (320, 330) mindestens eine der folgenden Vorrichtungen aufweist:
einen Taster oder einen Schalter,
ein erstes Zeitmodul,
eine Spannungsüberwachung,
einen magnetischen Kontakt, und/oder
einen Sensor für Licht, Wärme, Schall.

3. Messgerät (100) nach einem der vorhergehenden Ansprüche,
wobei zumindest einige Zustände des endlichen Automaten (350) ein veränderbares Attribut aufweisen.

4. Messgerät (100) nach einem der vorhergehenden Ansprüche,
wobei der endliche Automat (350) auslesbar ist.

5. Messgerät (100) nach einem der vorhergehenden Ansprüche,
wobei der endliche Automat (350) verschlüsselt programmierbar und/oder auslesbar ausgeführt ist.

6. Messgerät (100) nach einem der vorhergehenden Ansprüche,
wobei der Verbraucher (400) einen Füllstandsensor, ein Steuermodul, ein Anzeige- und/oder Bedienelement, ein zweites Zeitmodul, ein Anzeigeelement, ein Signalelement, und/oder ein Funkmodul umfasst.

7. Messgerät (100) nach einem der vorhergehenden Ansprüche, weiterhin aufweisend ein weiteres Zeitmodul,
wobei das weitere Zeitmodul dazu eingerichtet ist, das Zeitmodul und/oder das zweite Zeitmodul zu überwachen.

8. Messgerät (100) nach einem der vorhergehenden Ansprüche,
wobei der endliche Automat (350) einen positiven oder negativen zeitlichen Versatz realisiert, um mindestens einen der steuerbaren Schalter (250) verzögert und/oder zu einem anderen Zeitpunkt als einen anderen einen der steuerbaren Schalter (250) zu aktivieren.

9. Verwendung eines Messgeräts (100) nach einem der vorhergehenden Ansprüche zur Füllstandmessung, zur Topologiebestimmung, zur Grenzstandbestimmung, zur Durchflussmessung, zur Druckmessung und/oder zur Temperaturmessung.
